# FASCICULE DE BREVET EUROPEEN

(11) **EP 0 427 600 B1**
(45) Date de publication et mention de la délivrance du brevet: **28.12.1994**
(21) Numéro de dépôt: 90403100.2
(22) Date de dépôt: 02.11.1990
(51) Int. Cl.: H04N 7/16, G06K 19/073, G06K 7/10

(54) **Lecteur de carte à circuit intégré à contacts**
Kontaktchipkarten-Leser
Contact chip card reader

(30) Priorité: 07.11.1989 FR 8914568
(43) Date de publication de la demande: 15.05.1991
(73) Titulaire: LABORATOIRE EUROPEEN DE RECHERCHES ELECTRONIQUES AVANCEES, SOCIETE EN NOM COLLECTIF, 92400 Courbevoie (FR)
(72) Inventeur: Diehl, Eric, F-92045 Paris la Défense (FR); Hamon, Jöel, F-92045 Paris la Défense (FR)
(74) Mandataire: Ruellan-Lemonnier, Brigitte

(56) Documents cités:
- EP-A- 0 202 622
- EP-A- 0 243 312
- US-A- 4 808 202
- PATENT ABSTRACTS OF JAPAN vol. 10, no. 223 (P-483)(2279), 5 août 1986; & JP - A - 61059586 (FUJITSU KIDEN LTD) 27.03.1986

## Description

L'invention est relative à un lecteur de carte à circuit intégré à contacts, notamment pour la réception d'émissions de télévision à péage. Un système de télévision à péage utilisant un lecteur de cartes est décrit dans EP-A- 0 243 312.

Les cartes à circuit intégré à contacts ont des applications de plus en plus nombreuses (voir par example EP-A- 0 202 622 et US-A- 4808 802. Ces cartes ont le format rectangulaire des cartes de crédit avec, en surface, un circuit intégré contenant des informations en général confidentielles. Par exemple lorsque ces cartes sont utilisées pour autoriser la réception d'émissions de télévision à péage, le circuit intégré contient une information d'autorisation qui permet à un équipement de réception de désembrouiller les signaux vidéo brouillés reçus.

Les lecteurs de telles cartes comportent un circuit de gestion du protocole d'échange d'informations entre ce lecteur et la carte qui détermine, en fonction de données communiquées par le circuit de la carte, les paramètres de la carte tels que : la tension de programmation éventuellement nécessaire, c'est-à-dire la tension pour inscrire à demeure des informations dans une mémoire du circuit intégré, la fréquence d'horloge, l'intensité du courant d'alimentation, la vitesse d'échange des informations entre la carte et le lecteur et son mode, synchrone ou asynchrone, de fonctionnement.

L'invention permet de réaliser un tel lecteur de cartes à circuit intégré, notamment pour un équipement de réception d'émissions de télévision embrouillées, qui soit d'une réalisation simple et économique sans compromettre le fonctionnement correct de ce lecteur.

Elle est caractérisée en ce que le lecteur comprend un premier microcontrôleur de réception d'informations, notamment des signaux de télévision, un second microcontrôleur pour gérer le protocole d'échange d'informations avec la carte à circuit intégré et qui est commandé par le premier microcontrôleur, ce second microcontrôleur commandant un générateur d'alimentation de la carte fournissant les tensions nécessaires pour la lecture et, éventuellement, la programmation de ladite carte.

La séparation des fonctions en un premier microcontrôleur de réception d'informations et en un second microcontrôleur, commandé par le premier, pour la gestion du protocole d'échange d'informations avec la carte, permet d'optimiser le coût du lecteur.

Certains microcontrôleurs, de coût peu élevé, délivrent des signaux de sortie à potentiel flottant, c'est-à-dire de valeur variable de façon aléatoire, lorsqu'lis sont remis à zéro (RESET). Un microcontrôleur présentant cette caractéristique est par exemple celui de référence 8052 de la Société INTEL.

Dans le mode de réalisation préféré de l'invention on choisit pour le second microcontrôleur, destiné à la gestion du protocole d'échange d'informations entre la carte et le lecteur, un circuit de ce type, c'est-à-dire dont les sorties sont flottantes lors de la remise à zéro. Mais comme ce second microcontrôleur commande l'alimentation de la carte il faut prendre des mesures particulières pour que ces tensions flottantes ne provoquent pas des tensions d'alimentation de valeur dommageable pour la carte. C'est pourquoi, le premier microcontrôleur présente des sorties à potentiels fixes lors des remises à zéro et commande l'alimentation au cours de ces périodes. De préférence le premier microcontrôleur inhibe l'alimentation lors des remises à zéro. En variante le premier microcontrôleur impose, lors des remises à zéro, des valeurs minimales pour les tensions du générateur.

Une remise à zéro des microcontrôleurs intervient notamment à la mise sous tension du lecteur.

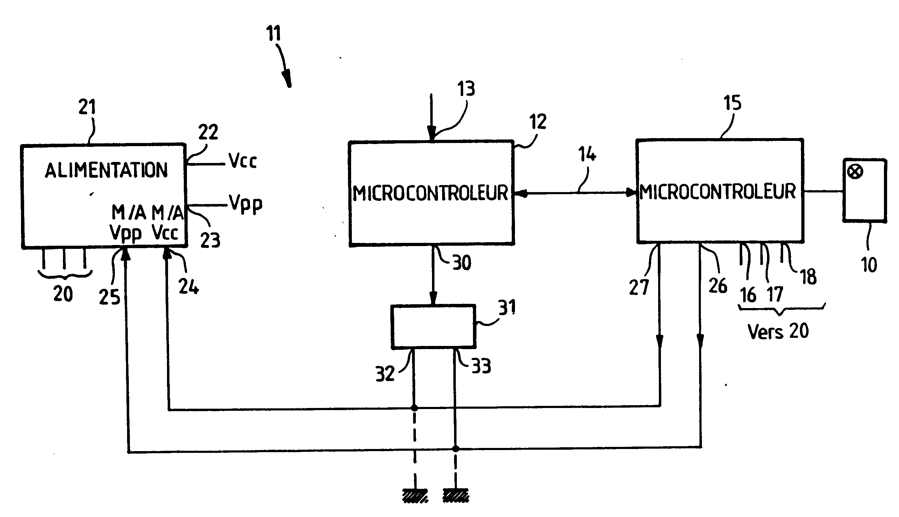

D'autres caractéristiques et avantages de l'invention apparaîtront avec la description de certains de ses modes de réalisation, celle-ci étant effectuée en se référant à la figure unique qui est un schéma de lecteur de carte à circuit intégré pour la réception d'émissions de télévision embrouillées.

Pour désembrouiller des émissions de télévision reçues de façon brouillée on prévoit habituellement un équipement de réception avec un circuit de désembrouillage (non représenté) qui ne peut fonctionner que s'il a reçu une information d'autorisation d'une carte 10 du type à circuit intégré conforme à la norme ISO 7618.

Cet équipement 11 comporte un premier microcontrôleur ou microprocesseur 12 du type 6305 de la Société INTEL destiné à recevoir sur une entrée 13 des informations numériques provenant du signal de télévision. Ces informations numériques proviennent par exemple d'un signal de type MAC-PAQUET ou "Vidéocrypt". Un système vidéocrypt est décrit par exemple dans FR-A-2631193 (publié le 10.11.1989) ou FR-A-2641 152 (publié le 29.06.1990) tous deux au nom de la demanderesse.

Ces informations emmagasinées et éventuellement traitées par le microcontrôleur 12 sont envoyées sur un bus 14 à un second microcontrôleur 15 qui constitue le circuit de gestion du protocole d'échange des informations entre la carte 10 et le lecteur 11.

Le potentiel des sorties du microcontrôleur 12 garde une valeur fixe lors de la remise à zéro. Par contre le microcontrôleur 15 qui est, dans l'exemple, de type INTEL 8052 présente des potentiels de sortie flottants lors de la procédure de remise à zéro commandée par le microcontrôleur 12.

Sur des sorties 16, 17 et 18 du microcontrôleur 15 apparaissent des signaux qui sont transmis à des entrées correspondantes 20 d'un générateur 21 de tensions continues V_{cc} et Vₚₚ. Le générateur 21 présente ainsi une sortie 22 qui délivre la tension V_{cc} d'alimentation des circuits de la carte 10 et une sortie 23 qui délivre la tension Vₚₚ nécessaire pour programmer la carte 10, c'est-à-dire pour inscrire à demeure des informations dans cette carte.

Les valeurs des tensions V_{cc} et Vₚₚ dépendent des signaux appliqués sur les entrées 20, c'est-à-dire fournis par les sorties 16, 17, 18 du microcontrôleur 15.

Par ailleurs une tension V_{cc} n'apparaît sur la sortie 22 que si une tension d'autorisation est fournie sur une entrée correspondante 24 du générateur 21. Le signal sur l'entrée 24 constitue ainsi la commande de "marche-arrêt" (M/A) de la tension V_{cc}. De même une entrée 25 du générateur 21 est prévue pour recevoir un signal d'autorisation, ou marche-arrêt, pour la tension Vₚₚ sur la sortie 23. Les signaux sur les entrées 24 et 25 du générateur 21 sont fournies, en fonctionnement normal, par des sorties 26 et 27 du microcontrôleur 15.

Etant donné que, lors d'une procédure de remise à zéro, notamment à la mise sous tension du lecteur 11, les sorties 16, 17, 18, 26, 27 du microcontrôleur 15 sont à potentiels flottants, c'est-à-dire variables de façon quasi aléatoire, il pourrait apparaître alors sur les entrées correspondantes 20, 24 et 25 du générateur 21 des signaux qui provoqueraient sur la sortie 23 une tension de programmation Vₚₚ et provoqueraient sur la sortie 22 une tension V_{cc} de valeur incorrecte risquant d'endommager les circuits de la carte 10.

Pour empêcher ce type de fonctionnement on prévoit que, lors des procédures de remise à zéro, le microcontrôleur 12 commande directement les entrées 24, 25 du générateur 21 de façon qu'aucune tension ne soit délivrée sur les sorties 22 et 23 . Autrement dit : En fonctionnement normal le générateur 20 est commandé par le microcontrôleur 15; par contre lors des remises à zéro la commande du générateur 21 est effectuée directement par le microcontrôleur 12. Cette procédure est rendue possible par le fait que c'est précisément le microcontrôleur 12 qui commande les remises à zéro du microcontrôleur 15 et que, comme déjà mentionné, les sorties du microcontrôleur 12 sont à potentiel fixe lors des remises à zéro.

Dans l'exemple une sortie 30 du microcontrôleur 12 commande une porte 31 dont les sorties 32 et 33 sont connectées aux entrées 24 et 25. En fonctionnement normal les sorties 32 et 33 sont en l'air alors que lors des périodes de remise à zéro ces sorties sont à un potentiel fixe, par exemple celui de la masse, de façon à imposer que les sorties 22 et 23 du générateur 21 ne délivrent aucune tension. En d'autres termes lors des remises à zéro les signaux sur les entrées 24 et 25 sont des signaux d'arrêt.

A la mise sous tension du lecteur 11, le microcontrôleur 12 commande la mise à zéro du microcontrôleur 15, puis sous la commande du microcontrôleur 12, le microcontrôleur 15 détermine les caractéristiques de la carte 10. Les valeurs des tensions d'alimentation et de programmation de la carte 10 sont délivrées sur les sorties 16, 17, 18, 26, 27 du microcontrôleur 15 afin de commander le générateur 21 comme indiqué ci-dessus. Le microcontrôleur détermine aussi les autres caractéristiques de la carte : fréquence d'horloge, consommation en courant, vitesse d'échange, mode de fonctionnement (synchrone ou asynchrone).

Ensuite des informations sont échangées entre le circuit de la carte 10 et les micrcontrôleurs 12 et 15 afin de déterminer si la carte contient une autorisation de désembrouillage des émissions. En cas de réponse positive le désembrouillage s'effectue d'une façon classique qui n'entre pas dans le cadre de l'invention et qu'il n'est donc pas utile de décrire ici.

Dans l'exemple les tensions de programmation peuvent prendre quatre valeurs : 5 volts, 12,5 volts, 15 volts et 21 volts, la fréquence d'horloge peut avoir pour valeurs : 3,5 MHz, 7 MHz et une autre valeur propre à la carte, la consommation en courant est de 80 mA, la vitesse d'échange est de 9600 bauds ou 19 200 bauds et le mode de fonctionnement est généralement de type asynchrone.

Bien entendu à chaque remise à zéro les signaux appliqués sur les entrées 24 et 25 grâce au microcontrôleur 12 inhibent les sorties 22 et 23.

En variante, à chaque remise à zéro sur les sorties 22 et 23 apparaissent, sous la commande du microcontrôleur 12, des tensions de valeurs minimales qui ne risquent pas d'endommager les circuits de la carte 10.

## Revendications

1. Lecteur (11) de carte à circuit intégré (10) à contacts, le lecteur comprenant une alimentation (21) pour les circuits de la carte (10), un moyen de type microcontrôleur pour contrôler les échanges d'informations entre la carte et le lecteur, et une entrée (13) pour des signaux extérieurs tels que des signaux de télévision, caractérisé en ce qu'il comprend un premier microcontrôleur (12) qui reçoit les signaux extérieurs et commande un second microcontrôleur (15), ce dernier contrôlant l'échange d'informations avec la carte (10) et délivrant des signaux de commande de l'alimentation (21) en fonction des informations reçues des circuits de la carte (10).

2. Lecteur selon la revendication 1, caractérisé en ce que les sorties du premier microcontrôleur (12) sont à potentiel fixe lors des remises à zéro et les sorties du second microcontrôleur (15) sont à potentiel flottant lors des remises à zéro, et en ce qu'il comprend un moyen (30, 31) pour que le premier microcontrôleur (12) commande l'alimentation (21) lors des remises à zéro.

3. Lecteur selon la revendication 2, caractérisé en ce que les sorties (22, 23) de l'alimentation (21) sont inhibées lors des remises à zéro.

4. Lecteur selon l'une quelconque des revendications précédentes, caractérisé en ce que le second microcontrôleur (15) présente des sorties (16, 17, 18) délivrant des signaux représentant les valeurs des tensions de sortie de l'alimentation (21) et au moins une sortie (26, 27) délivrant des signaux de marche-arrêt pour les sorties (22, 23) de l'alimentation (21).

5. Lecteur selon les revendications 2 et 4, caractérisé en ce que les entrées (24, 25) de marche-arrêt de l'alimentation sont commandées par le premier microcontrôleur lors des remises à zéro.

6. Lecteur selon l'une quelconque des revendications précédentes, caractérisé en ce que l'alimentation (21) présente une première sortie (22) pour les tensions d'alimentation (V_{cc}) de la carte (10) et une sortie (23) pour les tensions de programmation (Vₚₚ) de cette carte.

## Patentansprüche

1. Leser (11) für Kontaktchipkarten (10), mit einer Versorgung (21) für die Schaltungen der Karte (10), einem Mittel vom Typ eines Mikrocontrollers zum Steuern des Austausches von Informationen zwischen der Karte und dem Leser und einem Eingang (13) für externe Signale wie Fernsehsignale, dadurch gekennzeichnet, daß er einen ersten Mikrocontroller (12) enthält, der die externen Signale empfängt und einen zweiten Mikrocontroller (15) steuert, der den Austausch von Informationen mit der Karte (10) steuert und in Abhängigkeit von den von den Schaltungen der Karte (10) empfangenen Informationen Signale zum Steuern der Versorgung (21) liefert.

2. Leser nach Anspruch 1, dadurch gekennzeichnet, daß die Ausgänge des ersten Mikrocontrollers (12) während der Nullstellungen auf Festpotential und die Ausgänge des zweiten Mikrocontrollers (15) während den Nullstellungen auf schwebendem Potential liegen, und daß er ein Mittel (30, 31) enthält, damit der erste Mikrocontroller (12) die Versorgung (21) während den Nullstellungen steuert.

3. Leser nach Anspruch 2, dadurch gekennzeichnet, daß die Ausgänge (22, 23) der Versorgung (21) während den Nullstellungen gesperrt sind.

4. Leser nach einem der vorhergehenden Ansprüche, dadurch gekennzeichnet, daß der zweite Mikrocontroller (15) Ausgänge (16, 17, 18) aufweist, die Signale liefern, die Werte der Ausgangsspannungen der Versorgung (21) repräsentieren, und wenigstens einen Ausgang (26, 27) aufweist, der Signale für ein Ein- und Ausschalten der Ausgänge (22, 23) der Versorgung (21) liefert.

5. Leser nach den Ansprüchen 2 und 4, dadurch gekennzeichnet, daß die Eingänge (24, 25) für ein Ein- und Ausschalten der Versorgung während der Nullstellungen durch den ersten Mikrocontroller gesteuert sind.

6. Leser nach einem der vorhergehenden Ansprüche, dadurch gekennzeichnet, daß die Versorgung (21) einen ersten Ausgang (22) für die Versorgungsspannung (V_{cc}) der Karte (10) und einen Ausgang (23) für die Programmierspannungen (Vₚₚ) dieser Karte aufweist.

## Claims

1. Reader (11) for an integrated-circuit card (10) with contacts, the reader comprising a power supply (21) for the circuits of the card (10), a means of micro-controller type for monitoring the information exchanges between the card and the reader, and an input (13) for external signals such as television signals, characterized in that it comprises a first microcontroller (12) which receives the external signals and controls a second microcontroller (15), the latter monitoring the information exchange with the card (10) and delivering power supply (21) control signals depending on information received from the circuits of the card (10).

2. Reader according to Claim 1, characterized in that the outputs of the first microcontroller (12) are at fixed potential during the resets and the outputs of the second microcontroller (15) are at floating potential during the resets, and in that it comprises a means (30, 31) for the first microcontroller (12) to control the power supply (21) during resets.

3. Reader according to Claim 2, characterized in that the outputs (22, 23) of the power supply (21) are inhibited during resets.

4. Reader according to any one of the preceding claims, characterized in that the second microcontroller (15) has outputs (16, 17, 18) delivering signals representing the values of the output voltages of the power supply (21) and at least one output (26, 27) delivering on/off signals for the outputs (22, 23) of the power supply (21).

5. Reader according to Claims 2 and 4, characterized in that the on/off inputs (24, 25) of the power supply are controlled by the first microcontroller during resets.

6. Reader according to any one of the preceding claims, characterized in that the power supply (21) has a first output (22) for the power supply voltages (V_{cc}) of the card (10) and an output (23) for the programming voltages (Vₚₚ) of this card.
